# EUROPEAN PATENT APPLICATION

(11) **EP 1 870 323 A1**
(43) Date of publication of application: **26.12.2007**
(21) Application number: 07108547.6
(22) Date of filing: 21.05.2007
(51) Int. Cl.: B62D 55/253

(54) **Tractor track.**

(30) Priority: 13.06.2006 IT BO20060458
(71) Applicant: CNH Italia S.p.A., 41100 Modena (IT)
(72) Inventor: Bordini, Giorgio, 41043, Modena (IT)
(74) Representative: CNH IP Department

(57) **Abstract**

The tractor track (10) has a number of metal members (11) arranged side by side along respective axes (Y) perpendicular to the longitudinal axis (X) of the track (10). The main characteristic of the present invention lies in having a number of metal cables (18) housed inside respective seats (17) formed in the metal members (11) along corresponding axes parallel to the longitudinal axis (X).

## Description

The present invention relates to a track for self-propelled crawler machines, in particular farm tractors.

As is known, some types of tractors are fitted with tracks. The track is defined by a number of metal members arranged side by side crosswise to the longitudinal axis of the track; and the sprockets of a crawler wheel and a transmission wheel mesh with links defined between adjacent members.

To allow crawler tractors to travel along ordinary roads without damaging the asphalted surface, the track, in particular the part of the track contacting the road surface, is rubber-coated, i.e. embedded in a layer of rubber.

Tracks of the above type, however, have several drawbacks.

In particular, the adjacent metal members are connected by metal wires embedded in the rubber layer.

This type of connection, on the one hand, is complicated to produce, on account of the metal wires having to be aligned with one another at the rubber-coating stage; and, on the other, the severe mechanical stress to which the rubber-coated part - which is of poor mechanical strength - is subjected, makes the track unstable.

The main object of the present invention is therefore to provide a tractor track designed to eliminate the aforementioned drawbacks, and a track member connecting system that is easy to produce and highly stable.

According to the present invention, there is provided a tractor track of the type comprising a number of metal members arranged side by side along respective axes perpendicular to the longitudinal axis of said track, and characterized by comprising a number of metal cables housed in respective through seats formed in said metal members along corresponding axes parallel to said longitudinal axis.

A non-limiting embodiment of the present invention will be described by way of example with reference to the accompanying drawings, in which:
Figure 1 shows a partial view in perspective of a track in accordance with the teachings of the present invention;
Figure 2 shows a section of the Figure 1 track.

It should be pointed out that only the details essential to a clear understanding of the present invention are described below.

Number 10 in the accompanying drawings indicates as a whole a tractor track in accordance with the present invention.

Track 10 comprises a number of metal members 11 arranged side by side along respective axes Y perpendicular to a longitudinal axis of symmetry X of track 10. Each metal member 11 comprises two portions 12 aligned along axis Y, formed in one piece, and connected to each other along axis Y by an intermediate portion 13. Each portion 12 is defined by two bodies 14, between which is formed a slot 15 open in a direction parallel to axis X. In actual use, the sprockets of a crawler wheel and a transmission wheel (neither shown, for the sake of simplicity) mesh with slots 15.

From one face of each body 14, a respective projection 16 extends inwards of track 10, which, as is known, is looped endlessly about said wheels. And, on the same face of body 14 from which projections 16 extends, a through seat 17 is formed alongside projections 16 and along an axis parallel to axis X. More specifically, two said seats 17 are formed in each of the bodies 14 at the axial ends of member 11, and one seat 17 is formed in each of the central bodies 14.

When all the members 11 are aligned along axis X, seats 17 of the various adjacent members 11 are also aligned.

Metal cables 18, looped endlessly in a manner not shown, are fitted along the lines defined by seats 17, and are obviously housed inside seats 17.

The metal cables 18 are then fixed to respective seats 17 by deforming the material of seats 17 surrounding the cables.

The portions of members 11 extending between projections 16 are shaped to form a convenient rolling surface for the rollers of a carriage, and projections 16 themselves define lateral guides for the carriage rollers.

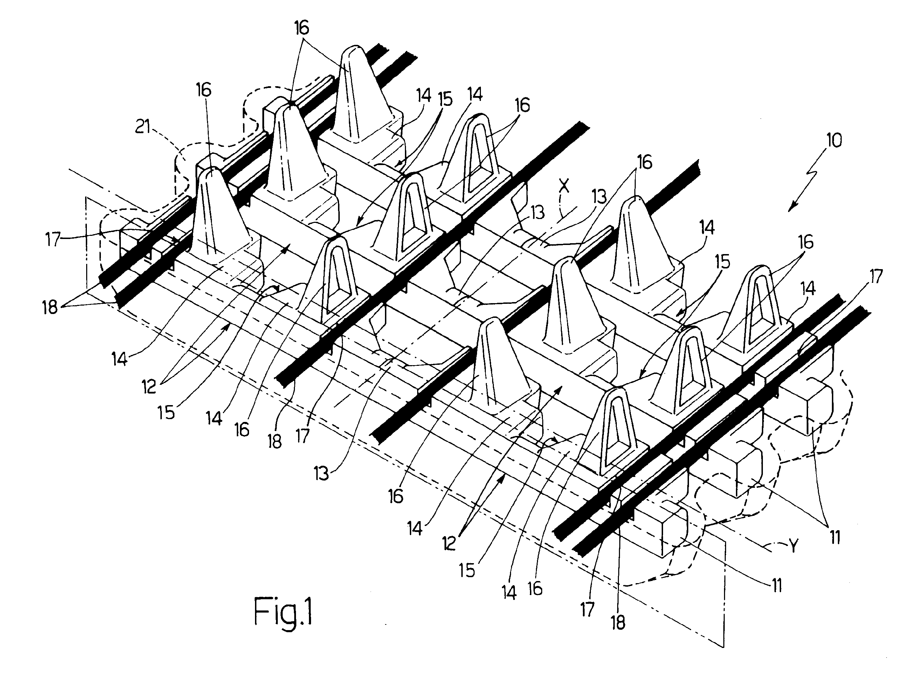

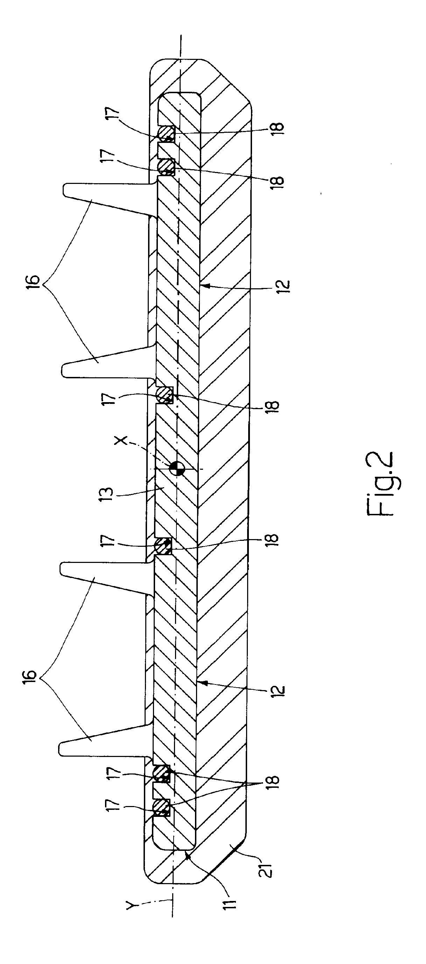

As shown in Figures 1 and 2, once assembled, track 10, with the exception of projections 16, is embedded entirely in a layer 21 of vulcanized rubber.

The advantages of the present invention will be clear from the foregoing description.

In particular, a track is achieved in which the metal cables securing the transverse members to one another are housed inside seats formed in the transverse members themselves, thus obtaining a track that is fast and easy to produce and of superior mechanical characteristics.

## Claims

1. A tractor track (10) of the type comprising a number of metal members (11) arranged side by side along respective axes (Y) perpendicular to a longitudinal axis of symmetry (X) of the track (10); and
**characterized in that** the track comprises a number of metal cables (18) housed in respective through seats (17) formed in said metal members (11) along corresponding axes parallel to said longitudinal axis of symmetry (X).

2. A track (10) according to claim 1, **characterized in that** each of said metal members (11) comprises a number of projections (16).

3. A track (10) according to claim 1 or 2, **characterized in that** the track (10) is embedded, with the exception of said projections (16), in a layer (21) of vulcanised rubber.

4. A track (10) according to any of the preceding claims, **characterized in that** each of said metal members (11) comprises two coaxial portions (12) formed in one piece; and each of said portions (12) has at least one slot (15) open in a direction parallel to said longitudinal axis of symmetry (X) and which, in use, meshes with the sprockets of a sprocket wheel.

5. A track (10) according to claim 4, when appended directly or indirectly to claim 2, **characterized in that** each of said portions (12) comprises two bodies (14), from each of which a respective one of said projections (16) extends, and between which said slot (15) is defined.

6. A track (10) according to claim 5, **characterized in that** at least one seat (17) is formed in each of said bodies (14).

7. A track (10) according to claim 2 and any claim dependent thereon, **characterized in** the portions of members 11 extending between projections 16 are shaped to form a rolling surface for the rollers of a carriage

8. A track (10) according to claim 2 and any claim dependent thereon, **characterized in that** the projections (16) are shaped to form lateral guides for the rollers of a carriage.
